# EUROPÄISCHE PATENTSCHRIFT

(11) **EP 3 252 843 B1**
(45) Veröffentlichungstag und Bekanntmachung des Hinweises auf die Patenterteilung: **27.02.2019**
(21) Anmeldenummer: 17171350.6
(22) Anmeldetag: 28.07.2011
(51) Int. Cl.: H01M 2/02, H01M 2/34, H01M 2/26, H01M 2/04, H01M 2/22, H01M 2/14, H01M 2/08, H01M 10/0525

(54) **KNOPFZELLE MIT WICKELELEKTRODE MIT THERMISCHER SICHERUNG**
BUTTON CELL WITH COIL ELECTRODE WITH THERMAL SECURING
PILE-BOUTON AYANT UNE ÉLECTRODE ENROULÉE AVEC FUSIBLE THERMIQUE

(30) Priorität: 03.08.2010 DE 102010033577
(43) Veröffentlichungstag der Anmeldung: 06.12.2017
(62) Teilanmeldung aus: 11749121.7
(73) Patentinhaber: VARTA Microbattery GmbH, 73479 Ellwangen (DE)
(72) Erfinder: Pytlik, Edward, 73479 Ellwangen (DE); Gaugler, Winfried, 73479 Ellwangen (DE)
(74) Vertreter: Patentanwaltskanzlei Cartagena

(56) Entgegenhaltungen:
- EP-A1- 2 006 940
- WO-A1-2009/150791
- DE-A1-102008 018 172
- JP-A- 2008 262 825

## Beschreibung

Die vorliegende Erfindung betrifft Knopfzellen mit einem Gehäuse aus zwei metallischen Gehäusehalbteilen, das einen gewickelten Elektroden-Separator-Verbund enthält.

Knopfzellen weisen üblicherweise ein Gehäuse aus zwei Gehäusehalbteilen, einen Zellenbecher und einen Zellendeckel, auf. Diese können beispielsweise aus vernickeltem Tiefziehblech als Stanzziehteile hergestellt werden. Gewöhnlich ist der Zellenbecher positiv und der Zellendeckel negativ gepolt. In dem Gehäuse können die verschiedensten elektrochemischen Systeme enthalten sein, beispielsweise Zink/Braunstein, primäre und sekundäre Lithiumsysteme oder sekundäre Systeme wie Nickel/Cadmium oder Nickel/Metallhydrid.

Der flüssigkeitsdichte Verschluss von Knopfzellen erfolgt klassisch durch Umbördeln des Randes des Zellenbechers über den Rand des Zellendeckels in Verbindung mit einem Kunststoffring, der zwischen Zellenbecher und Zellendeckel angeordnet ist und der gleichzeitig als Dichtungselement sowie zur elektrischen Isolierung des Zellenbechers und des Zellendeckels dient. Derartige Knopfzellen sind beispielsweise in der DE 3113 309 beschrieben.

Alternativ ist es auch möglich, Knopfzellen zu fertigen, bei denen Zellenbecher und Zellendeckel in axialer Richtung ausschließlich nur durch eine kraftschlüssige Verbindung zusammengehalten werden und die entsprechend keinen umgebördelten Becherrand aufweisen. Derartige Knopfzellen sowie ein Verfahren zu ihrer Herstellung sind in der deutschen Patentanmeldung mit dem Aktenzeichen DE 10 2009 017 514 beschrieben.

Ungeachtet der diversen Vorteile, die solche Knopfzellen ohne Bördelung aufweisen können, sind sie in axialer Richtung jedoch weniger belastbar als vergleichbare Knopfzellen mit umgebördelten Becherrand, insbesondere was axiale mechanische Belastungen angeht, die ihre Ursache im Inneren der Knopfzelle haben. So sind z.B. die Elektroden von wiederaufladbaren Lithium-Ionen-Systemen bei Lade- und Entladevorgängen stets Volumenänderungen ausgesetzt. Die dabei auftretenden axialen Kräfte können bei Knopfzellen ohne Bördelung natürlich vergleichsweise leichter zu Undichtigkeiten führen als bei Knopfzellen mit Bördelung.

Wickel aus flachen Elektroden- und Separatorschichten lassen sich recht einfach nach bekannten Verfahren (siehe z.B. DE 36 38 793) herstellen, indem beispielsweise auf einen als Endlosband vorliegenden Separator die Elektroden flächig, insbesondere in Form von Streifen, aufgebracht, insbesondere auflaminiert, werden. Aufgewickelt wird der Verbund aus Elektroden und Separatoren in der Regel auf einen sogenannten Wickeldorn. Nach Abstreifen des Wickels vom Wickeldorn bleibt im Zentrum des Wickels ein axialer Hohlraum zurück, was zur Folge hat, dass sich der Wickel gegebenenfalls in diesen Hohlraum hinein entspannen kann. Dies kann zu Problemen bei der elektrischen Kontaktierung der Elektroden mit den metallischen Gehäusehalbteilen führen.

DE 10 2008 018172 A1 offenbart eine Knopfzelle, umfassend a. als Gehäusehalbteile einen metallischen Zellenbecher und einen metallischen Zellendeckel, die durch eine elektrisch isolierende Dichtung voneinander getrennt sind und die ein Gehäuse mit einem ebenen Bodenbereich und einem dazu parallelen ebenen Deckelbereich ausbilden, b. einen Elektroden-Separator-Verbund mit mindestens einer positiven und mindestens einer negativen Elektrode innerhalb des Gehäuses, und c. metallische Ableiter, die die mindestens eine positive und die mindestens eine negative Elektrode mit jeweils einem der Gehäusehalbteile elektrisch verbinden, wobei d. der Zellenbecher einen ebenen Bodenbereich, einen zylindrisch ausgebildeten Mantelbereich, einen Randbereich und eine Schnittkante aufweist, e. der Zellendeckel einen ebenen Bodenbereich, einen zylindrisch ausgebildeten Mantelbereich, einen Randbereich und eine Schnittkante aufweist, f. der Zellendeckel in den Zellenbecher eingeschoben ist, so dass die Mantelbereiche von Zellenbecher und Zellendeckel überlappen.

Schwerwiegende Sicherheitsprobleme können bei Lithium-Ionen- oder Lithium-Polymer-Zellen auftreten, beispielsweise verursacht durch Stromstöße, wie sie durch einen externen Kurzschluss verursacht werden können, oder durch Überladung. Lithium-Ionen-Zellen weisen häufig eine graphithaltige Anode und eine Lithium-Kobaltoxid-basierte Kathode auf. Beim Ladevorgang werden Lithium-Ionen aus dem Lithium-Kobaltoxid ausgelagert und in die Graphitschichten der Anode interkaliert. Wird eine solche Zelle überladen, insbesondere auf eine Spannung von über 4,2 V, so kommt es vor, dass mehr Lithium-Ionen ausgelagert werden, als von den Graphitschichten der Anode aufgenommen werden können. In der Folge scheidet sich auf der Anode oberflächlich hochreaktives metallisches Lithium ab. Wird der Ladevorgang weiter fortgesetzt und entsprechend die Spannung weiter erhöht, insbesondere auf ein Niveau von deutlich über 4,2 V, so zersetzen sich gegebenenfalls auch Bestandteile des Elektrolyten in der Zelle und führen zu einer Aufgasung. Zudem wird die Lithium-Kobaltoxid-Struktur durch die fortschreitende Auslagerung des Lithiums immer instabiler, bis sie letztendlich unter Freisetzung von Oxidationsmitteln (Sauerstoff) zusammenbricht. Diese Prozesse führen unter Umständen zu einer starken Erwärmung der Zelle, die in einer explosionsartigen Verbrennung resultieren kann.

Die vorliegende Erfindung stellt eine Knopfzelle mit den Merkmalen des Anspruchs 1 bereit, die insbesondere vor den erwähnten axialen mechanischen Belastungen gut geschützt ist und die darüber hinaus noch weitere Sicherheitsmerkmale aufweist, die sie vor Schäden durch Überladung oder Kurzschlüsse schützen.

Eine erfindungsgemäße Knopfzelle umfasst stets zwei metallische Gehäusehalbteile, die durch eine elektrisch isolierende Dichtung voneinander getrennt sind und die ein Gehäuse mit einem ebenen Bodenbereich und einem dazu parallelen ebenen Deckelbereich ausbilden. Bei den beiden Gehäusehalbteilen handelt es sich, wie eingangs erwähnt, in der Regel um einen sogenannten Zellenbecher und einen Zellendeckel. Als Material für die Gehäusehalbteile sind insbesondere vernickelter Stahl oder Blech bevorzugt. Weiterhin als metallischer Werkstoff geeignet sind insbesondere Trimetalle, beispielsweise mit der Abfolge Nickel, Stahl (oder Edelstahl) und Kupfer (wobei die Nickelschicht bevorzugt die Außen- und die Kupferschicht bevorzugt die Innenseite des Knopfzellengehäuses bildet).

Als Dichtung kann beispielsweise eine Spritzguss- oder eine Foliendichtung zum Einsatz kommen. Letztere sind beispielsweise in der DE 196 47 593 beschrieben.

Innerhalb des Gehäuses sind mindestens eine positive und mindestens eine negative Elektrode angeordnet und zwar jeweils in Form von flachen Elektrodenschichten. Die Elektroden sind vorzugsweise über mindestens einen flächigen Separator miteinander verbunden. Bevorzugt sind die Elektroden auf diesen Separator auflaminiert oder aufgeklebt. Die Elektroden und der Separator weisen in der Regel jeweils nur Dicken im µm-Bereich auf. Als Separator dient in der Regel eine poröse Kunststofffolie.

Bevorzugt weist eine Knopfzelle gemäß der vorliegenden Erfindung mindestens eine Lithium interkalierende Elektrode auf. Zumindest eine der erwähnten Elektroden ist entsprechend in bevorzugten Ausführungsformen eine Lithium interkalierende Elektrode. Es handelt sich bei der erfindungsgemäßen Zelle somit vorzugsweise um eine Lithium-Ionen- oder eine Lithium-Polymer-Zelle.

Im Gehäuse einer erfindungsgemäßen Knopfzelle liegt der erwähnte Verbund aus Elektroden und mindestens einem flächigen Separator in Form eines Wickels, insbesondere in Form eines spiralförmigen Wickels, vor, wobei der Wickel derart angeordnet ist, dass seine Stirnseiten in Richtung des ebenen Bodenbereichs und des ebenen Deckelbereichs des Gehäuses weisen.

Neben den Gehäusehalbteilen und dem Elektroden-Separator-Verbund umfasst eine erfindungsgemäße Knopfzelle stets noch metallische Ableiter, die die mindestens eine positive und/oder die mindestens eine negative Elektrode mit jeweils einem der Gehäusehalbteile elektrisch verbinden. Bevorzugt bestehen der oder die mit der mindestens einen positiven Elektrode verbundenen Ableiter aus Aluminium. Der oder die mit der mindestens einen negativen Elektrode verbundenen Ableiter bestehen bevorzugt aus Nickel oder Kupfer.

Elektrodenseitig sind die Ableiter bevorzugt an Stromkollektoren angebunden. Bei diesen handelt es sich in der Regel um metallische Folien oder Netze, welche üblicherweise beidseitig mit Elektrodenaktivmaterial beschichtet sind. Auf der Seite der positiven Elektrode bestehen diese Stromkollektoren bevorzugt aus Aluminium, auf Seiten der negativen Elektrode bevorzugt aus Nickel oder Kupfer. Die Folien oder Netze weisen insbesondere Dicken zwischen 1 µm und 100 µm auf. Die Anbindung der Ableiter an die Stromkollektoren erfolgt bevorzugt durch Verschweißung.

Der erwähnte Elektroden-Separator-Verbund weist bevorzugt die Schichtabfolge
- negative Elektrode/Separator/positive Elektrode/Separator
   oder die Schichtabfolge
- positive Elektrode/Separator/negative Elektrode/Separator
   auf. Daneben können aber auch Verbünde mit den Schichtabfolgen
- negative Elektrode/Separator/positive Elektrode/Separator/negative Elektrode
   oder
- positive Elektrode/Separator/negative Elektrode/Separator/positive Elektrode
   bevorzugt sein. In diesen weist der Verbund mehr als eine positive und/ oder mehr als eine negative Elektrode auf.

Die mindestens eine positive Elektrode kann als Aktivmaterial beispielsweise Lithium-Kobaltoxid aufweisen. Für die mindestens eine negative Elektrode kommt als Aktivmaterial beispielsweise Graphit in Frage. Der Separator besteht in der Regel aus einem vorzugsweise porösen Kunststoff, beispielsweise aus einem Polyolefin.

Daneben weist die erfindungsgemäße Zelle bevorzugt auch einen Elektrolyten auf, beispielsweise einen alkalischen Elektrolyten oder einen organischen Elektrolyten, insbesondere auf Carbonatbasis (falls es sich bei der erfindungsgemäßen Zelle um eine Lithium-Ionen-Zelle handelt).

Besonders zeichnet sich eine erfindungsgemäße Knopfzelle dadurch aus, dass zumindest einer der Ableiter mit einer thermischen Sicherung versehen ist. Im Gegensatz zu einer elektrischen Sicherung wird die Auslösung einer solchen thermischen Sicherung nicht durch den sie durchfließenden Strom sondern vielmehr ausschließlich durch ihre Temperatur verursacht. Wird eine erfindungsgemäße Zelle z.B. überladen, so spricht die thermische Sicherung durch die bei der Überladung entstehende Wärme an und öffnet den Stromkreis. Eine weitere Überladung ist dann nicht mehr möglich.

Bei der thermischen Sicherung kann es sich sowohl um eine reversibel als auch um eine irreversibel auslösende Sicherung handeln. Reversible Sicherungen haben den Vorteil, dass die Zelle durch das Ansprechen der Sicherung nicht unbrauchbar gemacht wird. Nach Rückkehr der Zelle auf eine Temperatur unterhalb der Auslösetemperatur der reversiblen thermischen Sicherung kann die Zelle in der Regel wieder in Betrieb genommen werden. Allerdings besteht bei reversibel auslösenden Sicherungen die Gefahr, dass die Zelle nach dem Abkühlen wieder über einen kritischen Punkt hinaus geladen wird und nach mehreren Abschaltzyklen ein Punkt erreicht wird, an dem die eingangs erwähnte explosionsartige Verbrennung einsetzt. Aus diesem Grund kann es auch durchaus vorteilhaft sein, an Stelle einer reversiblen thermischen Sicherung eine irreversibel auslösende thermische Sicherung einzusetzen. Diese unterbrechen, einmal ausgelöst, einen Stromkreis dauerhaft. Eine erneute Inbetriebnahme einer Zelle mit einer ausgelösten irreversiblen Sicherung ist nicht möglich.

Die thermische Sicherung weist bevorzugt eine Nenn-Auslösetemperatur zwischen 65 °C und 130 °C auf. Des Weiteren ist es bevorzugt, dass die thermische Sicherung eine Haltetemperatur zwischen 60 °C und 70 °C aufweist. Die vorgenannten Werte wurden dabei jeweils bei einem Nennstrom von 5 C A nach IEC 61960-1 bestimmt.

Unter der Nenn-Auslösetemperatur versteht man die Temperatur, bei der die thermische Sicherung ihre Leitfähigkeit ändert und den Stromkreis öffnet. Unter der Haltetemperatur versteht man die maximale Temperatur, bei der durch die thermische Sicherung der Nennstrom für eine vorgegebene Zeit (vorliegend 100 Stunden) fließt, ohne dass die Sicherung auslöst, also die Leitfähigkeit ändert und den Stromkreis öffnet.

Besonders bevorzugt handelt es sich bei der thermischen Sicherung um eine Schmelzsicherung auf Basis einer Legierung, insbesondere auf Basis von Roses Metall oder D'Arcets Metall.

Bei Roses Metall handelt es sich bekanntlich um eine Legierung aus Bismut, Blei und Zinn. Der Schmelzpunkt dieser Legierung liegt bei ca. 98 °C und damit unter dem Siedepunkt von Wasser. Im Detail besteht Roses Metall aus 50 % Bismut, zwischen 25 und 28 % Blei und zwischen 22 und 25 % Zinn und weist eine Dichte von ca. 9,32 g/cm3 auf. Ähnliches gilt auch für D'Arcets Metall, ebenfalls einer Legierung aus Bismut, Zinn und Blei. Diese weist allerdings einen etwas niedrigeren Schmelzpunkt von ca. 93,75 °C auf.

In weiteren bevorzugten Ausführungsformen kann es sich bei der thermischen Sicherung um ein PTC-Element (positive temperature coefficient device) handeln. Ein solches PTC-Element ist ein Beispiel für eine reversible Sicherung. Die Verwendung eines solchen PTC-Elementes im Zusammenhang mit einer Lithium-Ionen-Zelle ist beispielsweise aus der DE 102 50 857 A1 bekannt. Wie dort beschrieben, kann das PTC-Element elektrisch leitend, beispielsweise durch Schweißen oder Löten, in einen Ableiter integriert werden. Vorteilhafterweise besteht das PTC-Element aus einem Polymer, in dem leitfähige Partikel homogen verteilt vorliegen. Es ist bei tiefen Temperaturen gut leitfähig, da dann die leitfähigen Partikel in elektrisch leitfähigem Kontakt miteinander stehen. Ab einer für jeden PTC spezifischen Temperatur quillt das Polymer auf, so dass die leitfähigen Partikel ihren Kontakt verlieren. Der Widerstand des PTC-Elements steigt dann schlagartig an.

Wird ein solches PTC-Element in eine erfindungsgemäße Zelle integriert, so ist bei niedrigen Temperaturen die elektrische Performance beim Be- und Entladen der Zelle voll gegeben. Wird die Zelle jedoch stark überladen oder extern kurzgeschlossen, so führt die hierbei entstehende Wärme zum sprunghaften Anstieg des elektrischen Widerstandes.

In bevorzugten Ausführungsformen der erfindungsgemäßen Zelle ist zumindest einer der Ableiter durch Verschweißung mit dem jeweiligen Gehäusehalbteil verbunden. Besonders bevorzugt sind der oder die Ableiter im ebenen Boden- bzw. Deckelbereich des Gehäuses an die Innenseite des Gehäuses angeschweißt. Durch die Verschweißung sind die mindestens eine positive Elektrode und/oder die mindestens eine negative Elektrode über einen oder mehrere Ableiter direkt mit dem ebenen Bodenbereich bzw. mit dem ebenen Deckelbereich des Gehäuses einer erfindungsgemäßen Knopfzelle verbunden, wobei in der Regel der Zellendeckel negativ gepolt ist und der Zellenbecher positiv.

Die Verschweißung von Ableitern und Gehäuse kann mittels eines Lasers erfolgen, insbesondere auch von außen durch die Gehäusewand der Gehäusehalbteile hindurch. Entsprechend stellt die vorliegende Erfindung somit Knopfzellen bereit, die Schweißnähte und/oder Schweißpunkte aufweisen, die das Gehäuse durchdringen, insbesondere ausgehend von seiner Außenseite. Die Betriebsparameter des Lasers müssen möglichst exakt an die Dicke des Gehäuses angepasst werden. Die Leistung lässt sich beispielsweise durch Variation der Pulsfrequenz modulieren. Schließlich soll der Laser lediglich für eine Verschweißung von Gehäuse und Ableiter sorgen während weitere Komponenten wie der Elektrodenwickel nach Möglichkeit nicht beschädigt werden sollen.

Geeignete Laser sind beispielsweise kommerziell erhältliche Faserlaser, also Festkörperlaser, bei denen der dotierte Kern einer Glasfaser das aktive Medium bildet. Das häufigste Dotierungselement für den laseraktiven Faserkern ist Erbium. Für Hochleistungsanwendungen wie vorliegend sind allerdings eherYtterbium und Neodym bevorzugt.

Ungeachtet der Tatsache, dass sich derartige Laser sehr fein an die jeweilige Gehäusedicke und Ableiterstärke anpassen lassen, ist es dennoch möglich, dass in Einzelfällen die Intensität des Lasers zu stark gewählt wird und der Laser die Gehäusewand und den Ableiter durchschlägt. Aus diesem Grund erfolgt die Verschweißung der Ableiter mit dem Gehäuse besonders bevorzugt in dem Teilbereich des Boden- bzw. des Deckelbereichs, der den axialen Hohlraum im Zentrum des Wickels stirnseitig begrenzt. Durchschlägt ein Laserstrahl das Gehäuse in diesem Bereich, kann der Wickel nicht beschädigt werden, der Laserstrahl wird stattdessen von dem gegenüber liegenden Gehäusehalbteil absorbiert oder von einem gegebenenfalls innerhalb des Hohlraums angeordneten Wickelkern.

Wenn möglich sollten die zu verschweißenden Ableiter möglichst flach an der Innenseite des Gehäuses anliegen. Dies kann beispielsweise gewährleistet werden, indem die Ableiter über ein Klebeband flach auf bzw. an den Stirnseiten des Wickels aus den Elektroden und dem mindestens einen flächigen Separator fixiert werden, bevor dieser in das Gehäuse eingelegt wird.

Bei den Ableitern einer erfindungsgemäßen Knopfzelle handelt es sich in bevorzugten Ausführungsformen um flächige Ableiter, insbesondere um Metallfolien, besonders bevorzugt um reckteck-, streifen- oder bandförmige Metallfolien. Die Folien weisen bevorzugt Dicken zwischen 5 µm und 100 µm auf.

Bevorzugt handelt es sich bei den Ableitern um separate Bauteile, die an die Elektroden, insbesondere an die Stromkollektoren in den Elektroden, angebunden, insbesondere angeschweißt, sind. Alternativ kann es sich bei den Ableitern aber auch um unbeschichtete Abschnitte eines Stromkollektors (Abschnitte, die frei von Elektrodenaktivmaterial sind), insbesondere um die unbeschichteten Enden eines solchen Stromkollektors, handeln. Durch Abknicken dieser unbeschichteten Abschnitte, insbesondere dieser unbeschichteten Enden, beispielsweise um 90 °, lassen sich die Enden mit dem Boden- oder Deckelbereich des Gehäuses einer erfindungsgemäßen Knopfzelle verbinden, beispielsweise durch die erwähnte Verschweißung.

Bevorzugt liegt zumindest ein Teilabschnitt des oder der Ableiter im Boden- oder Deckelbereich des Gehäuses flach an der Innenseite des oder der Gehäusehalbteile an, insbesondere wenn es sich bei den Ableitern um flächige Ableiter wie Folien handelt. Solche Ableiter können eine flache Schicht zwischen der Innenseite der Gehäusehalbteile und einer Stirnseite des Elektrodenwickels und somit einen großflächigen elektrischen Kontakt zum Gehäuse bilden.

Die thermische Sicherung einer erfindungsgemäßen Knopfzelle kann zwischen einer der Elektroden und dem entsprechenden Ableiter angeordnet sein. So kann sie beispielsweise mit dem Stromkollektor der positiven Elektrode auf der einen Seite und dem Ableiter für die positive Elektrode auf der anderen Seite oder dem Stromkollektor der negativen Elektrode auf der einen Seite und dem Ableiter für die negative Elektrode auf der anderen Seite verschweißt oder verlötet sein. Es ist aber natürlich auch möglich, die thermische Sicherung vollständig in einen der Ableiter zu integrieren oder zwischen einen der Ableiter und dem korrespondierenden Gehäusehalbteil anzuordnen.

Da an den Stirnseiten des Elektrodenwickels grundsätzlich sowohl positive als auch negative Elektroden offenliegen können, gilt es einen Kurzschluss zwischen den Elektroden zu vermeiden. In besonders bevorzugten Ausführungsformen umfasst eine erfindungsgemäße Knopfzelle daher mindestens ein separates Isoliermittel, das einen direkten elektrischen Kontakt zwischen den Stirnseiten des Wickels und den Ableitern, insbesondere einem flach an die Innenseite der Gehäusehalbteile anliegenden Teilabschnitt des oder der Ableiter, unterbindet. Bei einem solchen Isoliermittel kann es sich z.B. um eine Folie wie z.B. eine Kunststoffklebefolie handeln, mit der die der Innenseite des Knopfzellengehäuses abgewandte Seite des oder der Ableiter abgedeckt ist.

Der Elektrodenwickel einer erfindungsgemäßen Knopfzelle lässt sich nach bekannten Verfahren wie z.B. dem in der DE 36 38 793 beschriebenen herstellen, gemäß denen Elektroden und Separatoren auf einem Wickeldorn aufgewickelt werden. Nach dem Abstreifen des Wickels vom Wickeldorn kann sich im Zentrum des Wickels ein axialer Hohlraum befinden, vorzugsweise ein im Wesentlichen zylindrischer axialer Hohlraum. Im Gehäuse einer erfindungsgemäßen Knopfzelle wird ein solcher Hohlraum mantelseitig durch den Wickel begrenzt und stirnseitig durch den Boden- bzw. den Deckelbereich des Gehäuses oder zumindest durch einen Teilbereich derselben. Besonders bevorzugt ist der mindestens eine Ableiter in einem dieser Teilbereiche mit einem oder den Gehäusehalbteilen verschweißt. Gemäß der vorliegenden Erfindung kann es vorgesehen sein, dass eine erfindungsgemäße Knopfzelle in bevorzugten Ausführungsformen einen festen Wickelkern im Zentrum des Wickels aufweist, der den axialen Hohlraum im Zentrum des Wickels mindestens teilweise ausfüllt. Ein solcher Wickelkern fixiert den Elektrodenwickel in radialer Richtung und verhindert eine mögliche Implosion des Wickels in den axialen Hohlraum. Daneben verbessert ein solcher Wickelkern auch die Stabilität der erfindungsgemäßen Knopfzelle gegenüber äußeren mechanischen Einflüssen. Eine Beschädigung des Elektrodenwickels in der Knopfzelle durch einen äußeren mechanischen Druck in axialer Richtung ist in der Regel nicht mehr möglich.

Gemäß der bevorzugten Ausführungsform des Elektrodenwickels als spiralförmiger Elektrodenwickel ist der erwähnte axiale Hohlraum im Zentrum des Wickels vorzugsweise im Wesentlichen zylindrisch (insbesondere kreiszylindrisch) ausgebildet. Mantelseitig wird er durch den Wickel begrenzt, stirnseitig durch entsprechende Flächen des Boden- bzw. des Deckelbereichs des Knopfzellengehäuses.

Entsprechend ist auch der in einer erfindungsgemäßen Knopfzelle enthaltene Wickelkern bevorzugt als Zylinder, insbesondere als Hohlzylinder, ausgebildet. Die Höhe eines solchen Zylinders entspricht bevorzugt dem jeweiligen Abstand des ebenen Bodenbereichs von dem dazu parallelen ebenen Deckelbereich.

Besonders bevorzugt besteht der Wickelkern aus einem Metall wie Edelstahl oder aus Kunststoff.

In bevorzugten Ausführungsformen einer erfindungsgemäßen Knopfzelle sind die negative Elektrode und die positive Elektrode in dem wickelförmigen Elektroden-Separator-Verbund innerhalb des Verbundes versetzt zueinander angeordnet. Unter einer versetzten Anordnung soll dabei verstanden werden, dass die Elektroden derart angeordnet sind, dass in der erfindungsgemäßen Knopfzelle eine jeweils unterschiedliche Beabstandung der Elektroden zu den ebenen Boden- und Deckelbereichen resultiert. Im einfachsten Fall können z.B. eine positive und eine negative Elektrode als gleich breite Streifen leicht versetzt auf die gegenüberliegenden Seiten eines Separatorbandes aufgebracht werden, so dass der Abstand der positiven Elektrode zum oberen Separatorrand größer ist als der vergleichbare Abstand von der negativen Elektrode aus gemessen. Umgekehrtes gilt dann natürlich im Hinblick auf den Abstand zum unteren Separatorrand.

Als Resultat dieser versetzten Anordnung können Elektroden einer Polarität z.B. direkt an den ihnen zugeordneten, als flache Schicht zwischen der Innenseite eines der Gehäusehalbteile und einer Stirnseite des Elektrodenwickels ausgebildeten Ableiter anstoßen.

Besonders bevorzugt wird der bevorzugt spiralförmige Wickel einer erfindungsgemäßen Knopfzelle vor dem Verbauen an seinen Stirnseiten wärmebehandelt. Dabei wird er zumindest kurzfristig einer Temperatur ausgesetzt, bei der der Separator in dem Wickel thermoplastisch verformbar ist. In der Regel steht der Separator an den Stirnseiten des Wickels etwas über, selbst unter der Voraussetzung, dass die Elektroden mit dem beschriebenen Versatz zueinander angeordnet sind. Durch die Wärmebehandlung kann der Separator etwas zusammenschrumpfen.

Bei der erfindungsgemäßen Knopfzelle handelt es sich insbesondere um eine Knopfzelle ohne Bördelung, wie sie eingangs erwähnt wurde. Entsprechend besteht in axialer Richtung zwischen den Gehäusehalbteilen eine bevorzugt ausschließlich kraftschlüssige Verbindung. Die erfindungsgemäße Knopfzelle weist also bevorzugt keinen umgebördelten Becherrand auf, wie dies bei der aus dem Stand der Technik bekannten Knopfzellen in der Regel stets der Fall ist. Die Knopfzelle ist bördelfrei verschlossen. Der Zusammenhalt der Gehäusehalbteile wird bevorzugt im Wesentlichen nur durch Haftkraft gewährleistet.

Zur Herstellung einer bördelfreien erfindungsgemäßen Knopfzelle mit einem Gehäuse aus Zellenbecher und Zellendeckel geht man bevorzugt so vor, dass zunächst eine Dichtung auf den Mantelbereich eines Zellendeckels aufgebracht wird.

Die verwendeten Zellenbecher und Zellendeckel weisen in der Regel jeweils einen Boden- bzw. einen Deckelbereich, einen Mantelbereich, einen zwischen Boden- bzw. Deckelbereich und Mantelbereich angeordneten Randbereich und eine Schnittkante auf. Sowohl Boden- als auch Deckelbereich sind im Wesentlichen eben ausgebildet, sie bilden in der Regel später die Pole aus, an denen die Stromabnahme durch einen Verbraucher erfolgt. In der fertigen Knopfzelle sind der Bodenbereich des Zellenbechers und der Deckelbereich des Zellendeckels im Wesentlichen parallel zueinander ausgerichtet. Dagegen sind die Mantelbereiche von Zellenbecher und Zellendeckel in der fertigen Knopfzelle bevorzugt im Wesentlichen orthogonal zum Boden- bzw. zum Deckelbereich ausgerichtet und weisen im Wesentlichen eine zylindrische Geometrie auf. Vorzugsweise sind Innen- und Außenradius von Zellenbecher und Zellendeckel in den Mantelbereichen im Wesentlichen konstant. Die erwähnten Randbereiche von Zellenbecher und Zellendeckel bilden den Übergang zwischen den Mantelbereichen und dem Deckelbereich bzw. dem Bodenbereich. Sie sind also zum einen begrenzt durch die im Wesentlichen eben ausgebildeten Boden- und Deckelbereiche, zum anderen durch die orthogonal zu diesen angeordneten im Wesentlichen zylindrischen Mantelbereiche. Die Randbereiche können beispielsweise als scharfe Kante oder auch abgerundet ausgebildet sein.

In einem weiteren Schritt wird dann der Zellendeckel mit der aufgebrachten Dichtung in einen Zellenbecher eingeschoben, so dass sich ein Bereich ergibt, in dem die Mantelbereiche von Zellenbecher und Zellendeckel überlappen. Die Größe des Überlappungsbereiches bzw. des Verhältnisses von überlappendem Bereich zu nicht überlappenden Bereichen ist dabei durch die jeweilige Höhe der Mantelbereiche von Zellenbecher und Zellendeckel sowie durch die Tiefe des Einschubs festgelegt. Hinsichtlich des Mantelbereichs des Zellendeckels ist es bevorzugt, dass zwischen 20 % und 99 %, insbesondere zwischen 30 % und 99 %, besonders bevorzugt zwischen 50 % und 99 %, mit dem Mantelbereich des Zellenbechers überlappen (die Prozentzahlen beziehen sich jeweils auf die Höhe des Mantels bzw. des Mantelbereichs). Vor dem Einschieben können in den Zellenbecher und/oder in den Zellendeckel die sonstigen üblichen Bestandteile einer Knopfzelle (Elektroden, Separator, Elektrolyt etc.) eingesetzt werden. Nach dem vollständigen Einschieben des Zellendeckels in den Zellenbecher wird auf den Mantelbereich des Zellenbechers, insbesondere im Bereich der Schnittkante, ein Druck ausgeübt, um das Gehäuse abzudichten. Dabei sollen die zusammengefügten Gehäuseteile möglichst keinen oder nur sehr geringen Belastungen in axialer Richtung unterliegen. Der Druck wird daher insbesondere radial angelegt. Abgesehen von der bereits erwähnten Abdichtung des Gehäuses kann so auch der Außendurchmesser des Zellengehäuses kalibriert werden.

Besonders wichtig ist es, dass die Höhen der Mantelbereiche von Zellenbecher und Zellendeckel derart aufeinander abgestimmt sind, dass die Schnittkante des Zellenbechers durch den Druck auf den Mantelbereich des Zellenbechers gegen den Mantelbereich des Zellendeckels gepresst wird. Die Höhen der Mantelbereiche sind also bevorzugt so gewählt, dass ein Umbiegen der Schnittkante des Zellenbechers nach innen über den Randbereich des vollständig in den Zellenbecher eingeschobenen Zellendeckels nicht möglich ist. Es findet entsprechend keine Umbördelung des Randes des Zellenbechers über den Randbereich des Zellendeckels statt. In Folge dessen weist der Zellenbecher einer erfindungsgemäßen Knopfzelle gegebenenfalls einen Mantelbereich mit einem im Wesentlichen konstanten Radius in Richtung der Schnittkante auf.

Besonders bevorzugt wird zur Herstellung bördelfreier Knopfzellen ein Zellenbecher verwendet, der zumindest in einem Teilbereich seines Mantels konisch ausgebildet ist, so dass zumindest sein Innendurchmesser in Richtung der Schnittkante zunimmt. Dadurch wird das Einschieben des Zellendeckels in den Zellenbecher deutlich erleichtert. Die Dimensionen von Zellenbecher und Zellendeckel sind bevorzugt so aufeinander abgestimmt, dass größere Gegenkräfte vorzugsweise erst bei einem nahezu vollständigen Einschub des Deckels in den Becher auftreten. Vorzugsweise liegt der Konuswinkel dabei zwischen 10 Minuten und 3 Grad, zwischen 30 Minuten und 1 Grad 30 Minuten.

Der Zellendeckel, der mit aufgebrachter Dichtung in den Zellenbecher eingeschoben wird, ist in bevorzugten Ausführungsformen zumindest in einem Teil des Mantelbereichs zylindrisch ausgebildet. Dies betrifft gegebenenfalls insbesondere den Teil des Mantelbereiches, der nach dem Einschieben des Zellendeckels in den Zellenbecher mit dem erwähnten konisch ausgebildeten Teilbereich des Zellenbechermantels überlappt. Besonders bevorzugt ist der Mantel des Zellendeckels und damit auch der Mantelbereich zur Gänze zylindrisch ausgebildet. Vorzugsweise weist der Zellendeckel im Mantelbereich also einen konstanten Außenradius auf. Dies betrifft gegebenenfalls insbesondere den Teil, der nach dem Einschieben des Zellendeckels mit dem konisch ausgebildeten Teil des Mantelbereichs des Zellenbechers überlappt.

Beim Einschieben eines Zellendeckels mit zylindrischem Mantelbereich in einen zumindest in einem Teilbereich seines Mantels konisch ausgebildeten Zellenbecher, wie er beschrieben wurde, entsteht in der Regel ein sich nach oben öffnender Spalt zwischen Zellenbecher und Zellendeckel. Dieser Spalt wird in der Regel durch den Druck auf den Mantelbereich des Zellenbechers wieder beseitigt. So wird der Druck auf den Mantelbereich des Zellenbechers gegebenenfalls so gewählt, dass der konisch ausgebildete Teil des Mantelbereichs des Zellenbechers nach innen gedrückt wird, bis die Innenseite des Zellenbechers und die Außenseite des Zellendeckels im überlappenden Bereich im Wesentlichen gleichmäßig voneinander beabstandet sind. Die resultierende Knopfzelle weist Mantelbereiche auf, die parallel zueinander ausgerichtet sind, insbesondere im überlappenden Bereich.

Ein wichtiger Aspekt dabei ist die Wahl der Dichtung, die den Zellenbecher mit dem Zellendeckel verbindet. Bevorzugt handelt es sich bei der Dichtung um eine Kunststoffdichtung aus einem Thermoplasten.

Ganz besonders bevorzugt kommen vorliegend Kunststoffdichtungen, insbesondere Kunststofffolien, auf Basis von Polyamid oder auf Basis von Polyetheretherketonen zum Einsatz.

Es ist bevorzugt, dass die Dichtung einer bördelfreien Zelle eine Ausgangsdicke im Bereich zwischen 50 µm und 250 µm aufweist. Unter dem Begriff "Ausgangsdicke" soll dabei die Dicke verstanden werden, die die Dichtung aufweist, bevor sie auf den Mantel des Zellendeckels aufgebracht wird. Im Gegensatz dazu soll unter dem Begriff "Enddicke" die Dicke der Dichtung in der fertigen Zelle verstanden werden. Es ist klar, dass diese zumindest im überlappenden Bereich in der Regel dem Abstand zwischen der Innenseite des Zellenbechers und der Außenseite des Zellendeckels entspricht.

Damit eine ausreichend hohe Reibung zwischen Zellenbecher und Zellendeckel entstehen kann, sollen sowohl die Außen- als auch die Innenradien von Becher und Deckel aufeinander sowie auf die Dicke der Foliendichtung abgestimmt werden. Nur so kann ein ausreichend hoher Pressdruck entstehen, der die beiden Einzelteile zusammenhält. Für die dabei verwendeten Teile gilt bevorzugt, dass die Differenz zwischen dem Außenradius des in den Zellenbecher einzuschiebenden Zellendeckels an der Schnittkante des Zellendeckels und dem kleinsten Innenradius des Zellenbechers in den Teil des Mantelbereichs, der mit dem Mantelbereich des Zellendeckels überlappt, kleiner ist als die Ausgangsdicke der verwendeten Dichtung. Bevorzugt beträgt die Differenz zwischen 10 % und 90 % der Ausgangsdicke.

Nach dem Einschieben des Zellendeckels in den Zellenbecher kann ein Teil des Mantelbereiches des Zellenbechers radial nach innen eingezogen werden. Es handelt sich dabei insbesondere um den Teil des Mantelbereichs, der nicht mit dem Mantelbereich des Zellendeckels überlappt.

Das Einziehen kann zeitgleich zu der bereits erwähnten Druckausübung auf den Mantelbereich des Zellenbechers erfolgen, bevorzugt erfolgt das Einziehen aber in einem späteren separaten Schritt.

Bevorzugt handelt es sich bei der erfindungsgemäßen Knopfzelle um eine klassische Knopfzelle mit einem kreisrunden ebenen Bodenbereich und einem kreisrunden ebenen Deckelbereich. In einigen Ausführungsformen kann die erfindungsgemäße Knopfzelle jedoch z.B. auch eine ovale Ausgestaltung aufweisen. Zu beachten ist jedoch, dass das Verhältnis von Höhe zu Durchmesser bevorzugt stets unterhalb von 1 liegt Besonders bevorzugt liegt es bei einer erfindungsgemäßen Knopfzelle zwischen 0,1 und 0,9, insbesondere zwischen 0,15 und 0,7. Unter der Höhe soll dabei der kürzeste Abstand zwischen dem ebenen Bodenbereich und dem dazu parallelen ebenen Deckelbereich verstanden werden. Der Durchmesser meint die maximale Entfernung zweier Punkte auf dem Mantelbereich der Knopfzelle.

Die genannten und weitere Vorteile der Erfindung ergeben sich insbesondere auch aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

Fig. 1 zeigt schematisch den Querschnitt eines Gehäuses für eine erfindungsgemäße Knopfzelle ohne Bördelung und im Vergleich dazu das Gehäuse einer Knopfzelle mit umgebördeltem Becherrand.
Fig. 2 zeigt schematisch den Querschnitt einer bevorzugten Ausführungsform einer erfindungsgemäßen Knopfzelle mit einem bördelfreien Gehäuse, wie es in Fig. 1 dargestellt ist.

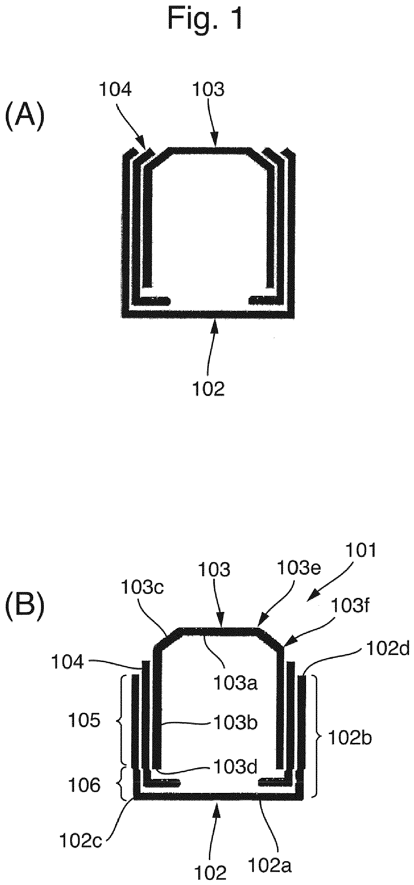

In Fig. 1 sind das Gehäuse 101 einer Knopfzelle ohne Bördelung (B) und zum Vergleich das einer Knopfzelle (A) mit umgebördeltem Becherrand dargestellt. Sowohl das Gehäuse der klassischen Knopfzelle als auch das der Knopfzelle ohne Bördelung ist jeweils aus einem Zellenbecher 102 und einem Zellendeckel 103 zusammengesetzt. Diese sind jeweils über eine Dichtung 104 miteinander verbunden. Während bei der klassischen Knopfzelle der Öffnungsrand des Zellenbechers 102 jedoch über den Rand des Zellendeckels 103 nach innen umgebördelt ist, ist dies beim Gehäuse 101 der Knopfzelle ohne Bördelung nicht der Fall.

Wie gut zu erkennen ist, überlappen beim Gehäuse 101 der Knopfzelle ohne Bördelung die Mantelbereiche 102b und 103b des Zellendeckels 103 und des Zellenbechers 102, wobei sich der Überlappungsbereich 105 ergibt. Der Innenradius des Zellenbechers 102 im überlappenden Bereich 105 ist bis zur Schnittkante 102d im Wesentlichen konstant. Das Gehäuse 101 einer Knopfzelle ohne Bördelung weist also keinen nach innen umgebördelten Becherrand auf, wie dies bei der klassischen Knopfzelle in (A) der Fall ist. Die Schnittkante 102d des Zellenbechers 102 liegt im Mantelbereich 103b an der Außenseite des Zellenbechers 103 an.

Der Zellenbecher 102 umfasst den im Wesentlichen ebenen Bodenbereich 102a, den im Wesentlichen zylindrisch ausgebildeten Mantelbereich 102b und den Randbereich 102c. Die Schnittkante 102d bildet den Öffnungsrand des Zellenbechers 102.

Der Zellendeckel 103 umfasst den im Wesentlichen ebenen Bodenbereich 103a, den im Wesentlichen zylindrisch ausgebildeten Mantelbereich 102b und den Randbereich 103c. Die Schnittkante 103d bildet den Öffnungsrand des Zellendeckels 103.

Der Randbereich 102c ist als scharfe Kante ausgebildet während der Randbereich 103c einen vergleichsweise abgeflachten Übergang zwischen dem Deckelbereich 103a und dem Mantelbereich 103b bildet. Während bei klassischen Knopfzellen ein solcher abgeflachter Übergang erforderlich war, um das Umbördeln des Randes des Zellendeckels 103 zu ermöglichen, kann bei einer Knopfzelle ohne Bördelung darauf verzichtet werden. Es wäre also denkbar, den Bereich 103c ebenfalls als scharfe Kante auszubilden. Begrenzt wird der Randbereich 103c nach einer Seite hin an der Linie 103e durch den im Wesentlichen ebenen Deckelbereich 103a und nach der anderen Seite an der Linie 103f durch den umlaufenden, orthogonal zum im Wesentlichen ebenen Deckelbereich 103a ausgerichteten und im Wesentlichen zylindrisch ausgebildeten Mantelbereich 103b.

Dargestellt ist ferner der Bereich 106, in dem der nicht mit dem Mantelbereich 103b des Zellendeckels überlappende Mantelbereich 102b des Zellenbechers 102 radial nach innen eingezogen ist. Der Außenradius des Mantels des Zellenbechers 102 ist entsprechend im Bereich 106 kleiner als der Außenradius des Mantels im Überlappungsbereich 105.

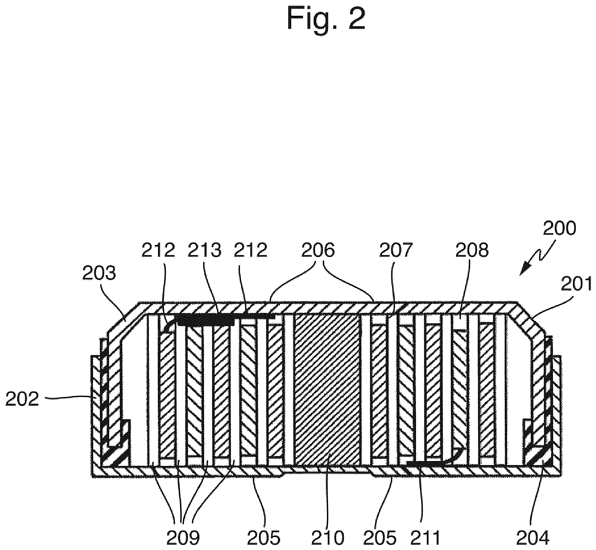

Fig. 2 zeigt schematisch den Querschnitt einer bevorzugten Ausführungsform einer erfindungsgemäßen Knopfzelle 200.

Diese weist ein Gehäuse 201 aus einem metallischen Zellenbecher 202 und einem metallischen Zellendeckel 203 auf. Über eine Dichtung 204 sind die beiden Teile dichtend miteinander verbunden. Zusammen bilden sie ein Gehäuse mit einem ebenen Bodenbereich 205 und einem dazu parallelen ebenen Deckelbereich 206 aus. Im Gebrauchszustand bilden diese ebenen Bereiche 205 und 206 die Pole der Knopfzelle, an denen eine Stromabnahme durch einen Verbraucher erfolgen kann.

Der Zellendeckel 203 ist in den Zellenbecher 202 eingeschoben, so dass die Mantelbereiche des Zellendeckels und des Zellenbechers überlappen, wobei der Innenradius des Zellenbechers 202 im überlappenden Bereich in Richtung der Schnittkante im Wesentlichen konstant ist. Der Rand des Zellenbechers 202 ist also nicht über den Rand des Zellendeckels 203 gebördelt.

Im Inneren der Elektrode ist ein Verbund aus einer streifenförmigen Elektrode 207, einer streifenförmigen Elektrode 208 und den streifenförmigen Separatoren 209 angeordnet. Der Verbund aus den Elektroden 207 und 208 sowie den Separatoren 209 liegt dabei in Form eines Wickels vor, dessen Stirnseiten in Richtung des ebenen Bodenbereichs 205 und des dazu parallelen ebenen Deckelbereichs 206 weisen. Aufgewickelt ist der Verbund auf dem Wickelkern 210 im Zentrum der Knopfzelle 200. Sowohl der Kern 210 als auch die um ihn gewickelten Elektroden und Separatoren sind orthogonal zu den ebenen Boden- und Deckelbereichen 205 und 206 ausgerichtet. Sofern die Elektroden bei einem Lade- oder Entladevorgang an Volumen gewinnen oder verlieren, wirken die dabei resultierenden mechanischen Kräfte überwiegend radial und können vom Mantelbereich der Knopfzelle 200 aufgefangen werden.

Kontaktiert sind die positiven und die negativen Elektroden mit den Gehäusehalbteilen Becher und Deckel über den Ableiter 211 und den Ableiter 212. Bei beiden Ableitern handelt es sich um dünne Folien, die flach zwischen den Stirnseiten des Wickels und den ebenen Deckel- bzw. Bodenbereichen 205 und 206 zum Liegen kommen. Bedingt durch den Wickelkern 211 wird ein steter leichter Anpressdruck auf die Ableiter aufrechterhalten. Von den Stirnseiten des Wickels sind die Ableiter bevorzugt durch ein separates Isolatorelement (in der Zeichnung nicht dargestellt) getrennt, beispielsweise durch eine dünne Folie.

In den Ableiter 212 ist die thermische Sicherung 213 integriert. Sie ist in den Ableiter eingeschweißt und unterbricht zuverlässig Lade- oder Entladevorgänge, sobald ihre Auslösetemperatur überschritten wird. Bei der Sicherung handelt es sich bevorzugt um eine irreversible Sicherung.

## Patentansprüche

1. Knopfzelle, umfassend
a. als Gehäusehalbteile einen metallischen Zellenbecher und einen metallischen Zellendeckel, die durch eine elektrisch isolierende Dichtung voneinander getrennt sind und die ein Gehäuse mit einem ebenen Bodenbereich und einem dazu parallelen ebenen Deckelbereich ausbilden,
b. einen Elektroden-Separator-Verbund mit mindestens einer positiven und mindestens einer negativen Elektrode innerhalb des Gehäuses, und
c. metallische Ableiter, die die mindestens eine positive und die mindestens eine negative Elektrode mit jeweils einem der Gehäusehalbteile elektrisch verbinden,
wobei
d. der Zellenbecher einen ebenen Bodenbereich, einen zylindrisch ausgebildeten Mantelbereich, einen Randbereich und eine Schnittkante aufweist,
e. der Zellendeckel einen ebenen Bodenbereich, einen zylindrisch ausgebildeten Mantelbereich, einen Randbereich und eine Schnittkante aufweist,
f. Der Zellendeckel in den Zellenbecher eingeschoben ist, so dass die Mantelbereiche von Zellenbecher und Zellendeckel überlappen,
g. der Elektroden-Separator-Verbund in Form eines spiralförmigen Wickels vorliegt, dessen Stirnseiten in Richtung des ebenen Bodenbereichs und des ebenen Deckelbereichs weisen, und
h. zumindest einer der Ableiter mit einer thermischen Sicherung versehen ist,
**dadurch gekennzeichnet, dass**
i. es sich bei den Ableitern um Metallfolien handelt,
j. mindestens ein Teilabschnitt des oder der Ableiter im Boden- oder Deckelbereich des Gehäuses flach an der Innenseite des oder der Gehäusehalbteile anliegt, und
k. die Knopfzelle ein separates Isoliermittel umfasst, das einen direkten elektrischen Kontakt zwischen den Stirnseiten des Wickels und dem mindestens einen Teilabschnitt unterbindet.

2. Knopfzelle nach Anspruch 1, **dadurch gekennzeichnet, dass** die Ableiter eine flache Schicht zwischen der Innenseite der Gehäusehalbteile und einer Stirnseite des Elektrodenwickels und somit einen großflächigen elektrischen Kontakt zum Gehäuse bilden.

3. Knopfzelle nach Anspruch 1 oder Anspruch 2, **dadurch gekennzeichnet, dass** das Isoliermittel eine Folie ist.

4. Knopfzelle nach einem der vorhergehenden Ansprüche, **dadurch gekennzeichnet, dass** sie bördelfrei verschlossen ist.

5. Knopfzelle nach einem der vorhergehenden Ansprüche, **dadurch gekennzeichnet, dass** der spiralförmige Wickel in seinem Zentrum einen axialen Hohlraum aufweist, der stirnseitig durch Teilbereiche des Boden- und des Deckelbereichs des Gehäuses begrenzt wird.

6. Knopfzelle nach Anspruch 5, **dadurch gekennzeichnet, dass** die Ableiter mit dem Gehäuse in dem Teilbereich des Boden- bzw. des Deckelbereichs, der den axialen Hohlraum im Zentrum des Wickels stirnseitig begrenzt, mit dem Gehäuse verschweißt sind.

7. Knopfzelle nach einem der Ansprüche 5 oder 6, **dadurch gekennzeichnet, dass** in dem axialen Hohlraum ein Wickelkern angeordnet ist.

8. Knopfzelle nach einem der Ansprüche 5 oder 6, **dadurch gekennzeichnet, dass** in dem axialen Hohlraum kein Wickelkern angeordnet ist.

9. Knopfzelle nach einem der vorhergehenden Ansprüche, **dadurch gekennzeichnet, dass** die Elektroden Stromkollektoren umfassen und es sich bei den Ableitern um separate Bauteile handelt, die an die Stromkollektoren angeschweißt sind.

10. Knopfzelle nach einem der Ansprüche 1 bis 8, **dadurch gekennzeichnet, dass** die Elektroden Stromkollektoren umfassen und es sich bei den Ableitern um unbeschichtete Abschnitte der Stromkollektoren handelt.

## Claims

1. Button cell, comprising
a. as housing halves a metallic cell cup and a metallic cell lid, which are separated from one another by an electrically insulating seal and form a housing with a planar bottom region and a planar lid region parallel thereto,
b. an electrode-separator assembly with at least one positive electrode and at least one negative electrode within the housing,
c. metallic diverters, which electrically connect the at least one positive electrode and the at least one negative electrode to one of the housing halves each,
wherein
d. the cell cup has a planar bottom region, a cylindrically formed shell region, a peripheral region and a cutting edge,
e. the cell lid has a planar bottom region, a cylindrically formed shell region, a peripheral region and a cutting edge,
f. the cell lid has been pushed into the cell cup, so that the shell regions of the cell cup and the cell lid overlap,
g. the electrode-separator assembly takes the form of a helical coil, the end faces of which point in the direction of the planar bottom region and the planar lid region, and
h. at least one of the diverters is provided with a thermal fuse,
**characterized in that**
i. the diverters are metal foils,
j. at least a subportion of the diverter or the diverters in the bottom or lid region of the housing lies flat against the inner side of the housing half or halves, and
k. the button cell comprises a separate insulating means, which prevents direct electrical contact between the end faces of the coil and the at least one subportion.

2. Button cell according to Claim 1, **characterized in that** the diverters form a flat layer between the inner side of the housing halves and an end face of the electrode coil, and consequently an electrical contact over a large surface area with respect to the housing.

3. Button cell according to Claim 1 or Claim 2, **characterized in that** the insulating means is a film.

4. Button cell according to one of the preceding claims, **characterized in that** it is closed without crimping.

5. Button cell according to one of the preceding claims, **characterized in that** the helical coil has in its centre an axial cavity, which is delimited at the end sides by subregions of the bottom region and the lid region of the housing.

6. Button cell according to Claim 5, **characterized in that** the diverters are welded to the housing in the subregion of the bottom region or the lid region that delimits the axial cavity in the centre of the coil at the end sides to the housing.

7. Button cell according to either of Claims 5 and 6, **characterized in that** a winding core is arranged in the axial cavity.

8. Button cell according to either of Claims 5 and 6, **characterized in that** no winding core is arranged in the axial cavity.

9. Button cell according to one of the preceding claims, **characterized in that** the electrodes comprise current collectors and the diverters are separate components that are welded to the current collectors.

10. Button cell according to one of Claims 1 to 8, **characterized in that** the electrodes comprise current collectors and the diverters are uncoated portions of the current collectors.

## Revendications

1. Pile bouton, comprenant
a. en tant que demi-partie de boîtier, un gobelet de pile métallique et un couvercle de pile métallique, lesquels sont séparés l'un de l'autre par une garniture d'étanchéité électriquement isolante et forment un boîtier ayant une zone de fond plane et une zone de couvercle plane parallèle à celle-ci,
b. une combinaison électrode-séparateur possédant au moins une électrode positive et au moins une électrode négative à l'intérieur du boîtier, et
c. des conducteurs de décharge métalliques qui relient électriquement l'au moins une électrode positive et l'au moins une électrode négative respectivement avec l'une des demi-parties de boîtier,
d. le gobelet de pile possédant une zone de fond, une zone d'enveloppe de configuration cylindrique, une zone de bord et une arête de coupe,
e. le couvercle de pile possédant une zone de fond, une zone d'enveloppe de configuration cylindrique, une zone de bord et une arête de coupe,
f. le couvercle de pile étant inséré dans le gobelet de pile de telle sorte que les zones d'enveloppe du gobelet de pile et du couvercle de pile se chevauchent,
g. la combinaison électrode-séparateur se présentant sous la forme d'un enroulement en spirale dont les côtés frontaux pointent en direction de la zone de fond plane et de la zone de couvercle plane, et
h. au moins l'un des conducteurs de décharge étant pourvu d'une sécurité thermique,
**caractérisée en ce que**
i. les conducteurs de décharge sont des films métalliques,
j. au moins une portion partielle du ou des conducteurs de décharge s'applique dans la région du fond ou du couvercle du boîtier à plat contre le côté intérieur de la ou des demi-parties de boîtier, et
k. la pile bouton comprend un moyen isolant séparé qui supprime un contact électrique direct entre les côtés frontaux de l'enroulement et l'au moins une portion partielle.

2. Pile bouton selon la revendication 1, **caractérisée en ce que** les conducteurs de décharge forment une couche plate entre le côté intérieur des demi-parties de boîtier et un côté frontal de l'enroulement d'électrode et ainsi un contact électrique à grande surface avec le boîtier.

3. Pile bouton selon la revendication 1 ou la revendication 2, **caractérisée en ce que** le moyen isolant est un film.

4. Pile bouton selon l'une quelconque des revendications précédentes, **caractérisée en ce qu'**elle est fermée sans bordure.

5. Pile bouton selon l'une quelconque des revendications précédentes, **caractérisée en ce que** l'enroulement en spirale présente en son centre une cavité axiale qui est limitée du côté frontal par des régions partielles de la région du fond et de la région du couvercle du boîtier.

6. Pile bouton selon la revendication 5, **caractérisée en ce que** les conducteurs de décharge sont soudés au boîtier dans la région partielle de la région de fond ou de la région du couvercle qui limite la cavité axiale au centre de l'enroulement au boîtier.

7. Pile bouton selon l'une quelconque des revendications 5 ou 6, **caractérisée en ce qu'**un noyau d'enroulement est disposé dans la cavité axiale.

8. Pile bouton selon l'une quelconque des revendications 5 ou 6, **caractérisée en ce qu'**aucun noyau d'enroulement n'est disposé dans la cavité axiale.

9. Pile bouton selon l'une quelconque des revendications précédentes, **caractérisée en ce que** les électrodes comprennent des collecteurs de courant et les conducteurs de décharge sont des composants séparés qui sont soudés aux collecteurs de courant.

10. Pile bouton selon l'une quelconque des revendications 1 à 8, **caractérisée en ce que** les électrodes comprennent des collecteurs de courant et les conducteurs de décharge sont des portions non revêtues des collecteurs de courant.
